(19) Europäisches Patentamt / European Patent Office / Office européen des brevets

(11) **EP 2 865 645 A1**

(12) **EUROPEAN PATENT APPLICATION**
published in accordance with Art. 153(4) EPC

(43) Date of publication:
**29.04.2015 Bulletin 2015/18**

(51) Int Cl.:
*C01B 31/02* (2006.01)   *H01B 1/24* (2006.01)
*H01B 5/14* (2006.01)   *H01B 13/00* (2006.01)

(21) Application number: **13810402.1**

(22) Date of filing: **21.06.2013**

(86) International application number:
**PCT/JP2013/067059**

(87) International publication number:
**WO 2014/002885 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.06.2012  JP 2012142656**
**26.06.2012  JP 2012142657**

(71) Applicant: **Toray Industries, Inc.**
**Tokyo 103-8666 (JP)**

(72) Inventors:
• **NISHINO, Hidekazu**
  **Nagoya-shi**
  **Aichi 455-8502 (JP)**
• **HONDO, Kazunori**
  **Nagoya-shi**
  **Aichi 455-8502 (JP)**
• **IMAZU, Naoki**
  **Nagoya-shi**
  **Aichi 455-8502 (JP)**

(74) Representative: **Webster, Jeremy Mark et al**
**Mewburn Ellis LLP**
**33 Gutter Lane**
**London EC2V 8AS (GB)**

(54) **DISPERSION LIQUID OF CARBON NANOTUBE-CONTAINING COMPOSITION AND CONDUCTIVE MOLDED BODY**

(57) The present invention relates to a dispersion liquid of a carbon nanotube-containing composition which contains a carbon nanotube-containing composition, a dispersant with a weight-average molecular weight of 5,000 to 60,000 as determined by gel permeation chromatography, and an aqueous solvent. The present invention provides a dispersion liquid of a carbon nanotube-containing composition which shows high dispersibility on a base while maintaining high dispersibility for the carbon nanotube-containing composition.

Fig. 1

EP 2 865 645 A1

**Description**

Technical Field

The present invention relates to a dispersion liquid of a carbon nanotube-containing composition and an electrically conductive molded body obtained by coating a base therewith.

Background Art

Carbon nanotubes are materials considered promising for a range of industrial applications because of various characteristics attributable to their ideal one-dimensional structure, such as electrical conductivity, thermal conductivity and mechanical strength. Hopes are that controlling the geometry of carbon nanotubes in terms of diameter, number of walls and length will lead to performance improves and an expanded applicability. Generally speaking, carbon nanotubes with fewer walls have higher graphite structures. Since single-walled carbon nanotubes and double-walled carbon nanotubes have high graphite structures, their electrical conductivity, thermal conductivity and other characteristics are also known to be high. Of all multi-walled carbon nanotubes, those with a relatively few two to five walls exhibit characteristics of both a single-walled carbon nanotube and a multi-walled carbon nanotube, so that they are in the spotlight as promising materials for use in various applications.

Examples of an application that takes advantage of the carbon nanotube of an electrical conductivity include cleanroom parts, display parts, and automobile parts. Carbon nanotubes are used in these parts to impart an antistatic property, electrical conductivity, radio wave absorption property, electromagnetic shielding property, near infrared blocking property and so on. As carbon nanotubes have high aspect ratios, even a small amount of them can form an electrically conductive path. Because of this, they have the potential to become electrically conductive materials with outstanding optical transparency and detachment resistance compared to conventional electrically conductive fine particles based on carbon black, etc. An optical-purpose transparent electrically conductive film using carbon nanotubes, for instance, is well-known (patent document 1). To obtain an electrically conductive film with excellent optical transparency using carbon nanotubes, it is necessary to efficiently form an electrically conductive path with a small number of carbon nanotubes by breaking up thick carbon nanotube bundles or cohesive aggregates consisting of several tens of carbon nanotubes and highly dispersing them. Examples of a known method to obtain such an electrically conductive film include the coating of a base with a dispersion liquid created by highly dispersing carbon nanotubes in a solvent. Techniques to highly disperse carbon nanotubes in a solvent include the use of a dispersant (patent documents 1 and 2). To disperse carbon nanotubes as highly as possible, it is particularly advantageous to disperse them in an aqueous solvent using a dispersant having both a hydrophilic group with affinity for water and a hydrophobic group with high affinity for carbon nanotubes (patent document 2).

Prior Art Documents

Patent Documents
Patent document 1: Japanese Unexamined Patent Publication (Kokai) No. 2006-269311
Patent document 2: Japanese Unexamined Patent Publication (Kokai) No. 2009-163959

Summary of the Invention

Problems to be Solved by the Invention

There is a problem with such dispersion liquids in that, though carbon nanotubes are highly dispersed in the liquid, they tend to re-coagulate in process of coming in contact with a base and experiencing the removal of the solvent, making an efficient formation of an electrically conductive path difficult. For this reason, a dispersion liquid capable of maintaining high carbon nanotube dispersability when applied to a base as a coat has been sought after.

Devised to address the above situation, the present invention aims to obtain a dispersion liquid of a carbon nanotube-containing composition having a high carbon nanotube dispersibility in the dispersion liquid, capable of suppressing the fragmentation of carbon nanotubes, excellent in dispersibility of carbon nanotubes when a base is coated with the dispersion liquid, and amenable to the production of electrically conductive molded bodies with good transparent conductivity.

Means of Solving the Problems

As a result of intensive studies, the inventors have found that dispersing a carbon nanotube-containing composition in an aqueous solvent using a dispersant with a specific molecular weight makes it possible to obtain a dispersion liquid in which the carbon nanotube-containing composition has a small coagulation diameter when applied to a base as a coat, and this has led to the present invention.

Namely, the present invention relates to a dispersion liquid of a carbon nanotube-containing composition which contains a carbon nanotube-containing composition, a dispersant with a weight-average molecular weight of 5,000 to 60,000, as determined by gel permeation chromatography, and an aqueous solvent.

The present invention also relates to an electrically conductive molded body produced by forming an electrically conductive layer over a base, wherein the electrically conductive layer contains a carbon nanotube-containing composition and a dispersant with a weight-average molecular weight of 5,000 to 60,000, as determined by gel permeation chromatography, the coagulation diameter of the carbon nanotube-containing composition being 1 nm to 4.5 nm, and the average length of the carbon nanotube-containing composition being 3.5 $\mu$m to 6 $\mu$m.

The present invention further relates to a production method of an electrically conductive molded body based on the coating of a base with a dispersion liquid of a carbon nanotube-containing composition followed by the removal of the aqueous solvent.

Advantageous Effect of the Invention

The present invention provides a dispersion liquid of a carbon nanotube-containing composition dispersion liquid which exhibits a good dispersibility of carbon nanotubes, suppresses the fragmentation of carbon nanotubes, and maintains excellent carbon nanotube dispersibility when applied to a base as a coat. Electrically conductive molded bodies obtained using such a carbon nanotube dispersion liquid can be transparent and highly electrically conductive.

Brief Description of the Drawings

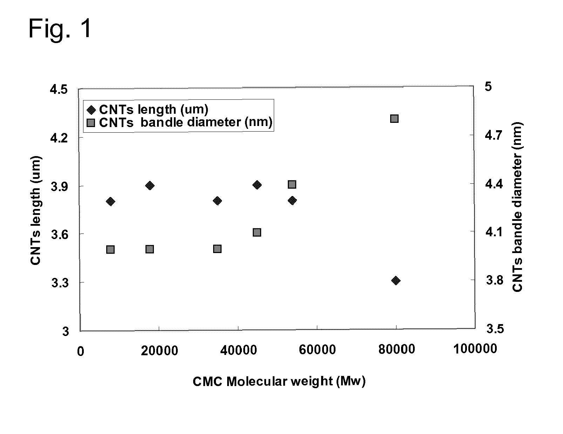

[Fig. 1] Fig. 1 is a diagram illustrating the relationship between the weight-average molecular weight of the dispersant, on the one hand, and the carbon nanotube coagulation diameter and average length when applied to a base, on the other.

Description of Preferred Embodiments

The present invention uses carbon nanotubes as an electrically conductive material. For the purpose of the present invention, a carbon nanotube-containing composition means the whole mixture containing a plurality of carbon nanotubes. There are no specific limitations on the mode of existence of carbon nanotubes in a carbon nanotube-containing composition, so that they can exist in a range of states, such as independent, bundled and entangled, or in any combination of those states. A carbon nanotube-containing composition can also contain diverse carbon nanotubes in terms of the number of walls or diameter. Any dispersion liquid, composition containing other ingredients or complex as a composite mixture with other components is deemed to contain a carbon nanotube-containing composition as long as a plurality of carbon nanotubes are contained. A carbon nanotube-containing composition may contain impurities attributable to the carbon nanotube production method (e.g. catalysts and amorphous carbon).

A carbon nanotube has a cylindrical shape formed by rolling a graphite sheet. If rolled once, it is a single-walled carbon nanotube, and if rolled twice, it is a double-walled carbon nanotube. In general, if rolled multiple times, it is a multi-walled carbon nanotube.

Be it single-walled, double-walled and multi-walled, a dispersion liquid of a carbon nanotube-containing composition or an electrically conductive molded body of the present invention may employ any kind of carbon nanotube according to the usage characteristics. If carbon nanotubes with fewer walls (e.g. single to quintuple-walled) are used, an electrically conductive molded body with higher electrical conductivity as well as high optical transparency can be obtained. Using carbon nanotubes with two or more walls makes it possible to obtain an electrically conductive molded body with low light wavelength dependence in terms of optical characteristics. To obtain an electrically conductive molded body with high optical transparency, it is preferable that at least 50 single to quintuple-walled carbon nanotubes, more preferably at least 50 double to quintuple-walled carbon nanotubes, are contained in every 100 carbon nanotubes. It is particularly preferable that at least 50 double-walled carbon nanotubes are present in every 100 carbon nanotubes as it gives rise to very high electrical conductivity and dispersibility. Generally speaking, multi-walled carbon nanotubes with six or more walls have a low degree of crystallinity and low electrical conductivity, as well as large diameter, so that the transparent conductivity of an electrically conductive molded body becomes low due to a smaller number of contacts per unit quantity of carbon nanotubes in the electrically conductive layer.

The number of walls of carbon nanotubes may for instance be measured by preparing a sample. Namely, in the case of a carbon nanotube-containing composition dispersed in a solvent, if the solvent is aqueous, the dispersion liquid is diluted with water to bring the concentration of the composition to a suitable level in terms of visual observability and several $\mu$L of it is dropped onto a collodion film and air-dried, followed by a study of the carbon nanotube-containing composition on the collodion film using a direct transmission electron microscope. If the solvent is nonaqueous, the first step is to remove it by drying, and the residue is then dispersed again in water. Then the dispersion liquid is suitably diluted and several $\mu$L of it is dropped onto a collodion film and air-dried, followed by an observation using a transmission electron microscope. The number of walls of carbon nanotubes featuring in an electrically conductive molded body may also be determined by similarly observing the carbon nanotube-containing composition as it is prior to coating. When sampling the carbon nanotube-containing composition from an electrically conductive molded body, the electrically conductive molded body is embedded in an epoxy resin and then sliced to a thickness of 0.1 $\mu$m or less using a microtome, etc., followed by an observation of the cross section using a transmission electron microscope. The carbon nanotube-containing composition may also be extracted from an electrically conductive molded body using a solvent and studied using a high-resolution transmission electron microscope in a similar manner to a carbon nanotube-containing composition. The concentration of the carbon nanotube-containing composition in a dispersion liquid to be dropped onto a collodion film may be any value, as long as each carbon nanotube can be individually observed. A typical example is 0.001 wt%.

The measurement of the number of walls of carbon nanotubes as described above may, for instance, be performed in the following manner: Using a transmission electron microscope, an observation is conducted at a magnification ratio or 400,000$\times$. From various 75 nm-square areas as observed in the field of view, one covered by carbon nanotubes by at least 10% is randomly chosen, and the number of walls is measured for 100 carbon nanotubes randomly sampled from the area. If 100 carbon nanotubes cannot be measured in a single field-of-view area, carbon nanotubes are sampled from two or more areas until the number reaches 100. In this regard, a carbon nanotube is counted as one as long as part of it is seen in the field-of-view area, and it is not an absolute requirement that both ends be visible. If seemingly two carbon nanotubes according to their appearance in one field-of-view area may possibly be connected outside the area, they are counted as two.

Though there are no specific limitations on the diameters of carbon nanotubes, the diameters of carbon nanotubes having a wall or walls that fall within the preferable number range as specified above range from 1 nm to 10 nm, with those lying within the 1 to 3 nm diameter range particularly advantageously used.

Carbon nanotubes may be modified by a functional group or alkyl group on the surface or at terminals or doped with an alkali metal or halogen. For instance, carbon nanotubes may be functionalized with a carboxyl group or hydroxyl group by heating in an acid. Doping carbon nanotubes is preferable as it improve their electrical conductivity.

If carbon nanotubes are too short, an electrically conductive path cannot be efficiently formed, so that their average length is preferably 3.5 $\mu$m or more. If, on the other hand, carbon nanotubes are too long, dispersibility tends to be small, so that their average length is preferably 6 $\mu$m or less.

As described later, the average length of carbon nanotubes in a dispersion liquid may be studied using an atomic force microscope. In the case of a composition, the average length may be studied using an atomic force microscope after several $\mu$L of it is dropped onto a mica substrate and air-dried. The concentration of the carbon nanotube-containing composition in a dispersion liquid to be dropped may be any value, as long as each carbon nanotube can be individually observed. A typical example is 0.003 wt%

The average length of carbon nanotubes is determined by first preparing a specimen using the method described above and observing it with an atomic force microscope, taking a photograph of a 30 $\mu$m-square field-of-view area which contains at least 10 carbon nanotubes, and measuring the lengths of carbon nanotubes randomly sampled from the area. If 100 carbon nanotubes cannot be measured in a single field-of-view area, carbon nanotubes are sampled from a plurality of areas until the number reaches 100. Measuring the lengths of a total 100 carbon nanotubes makes it possible to determine the length distribution of carbon nanotubes.

It is preferable that carbon nanotubes whose length is 0.5 $\mu$m or less, more preferably 1 $\mu$m or less, are present at a rate of 30 or less per every 100, as it makes it possible to reduce contact resistance and improve light transmittance. It is also preferable that carbon nanotubes whose length is 10 $\mu$m or more are present at a rate of 30 or less per every 100, as it makes it possible to improve dispersibility.

To obtain an electrically conductive molded body with excellent transparent conductivity, it is preferable to use high-quality carbon nanotubes with high degrees of crystallinity. Carbon nanotubes with high degrees of crystallinity do exhibit excellent electrical conductivity. However, such high-quality carbon nanotubes form more cohesive bundles and aggregates compared to carbon nanotubes with low degrees of crystallinity, so that it is very difficult to highly disperse them on a stable basis by breaking them up into individual carbon nanotubes. For this reason, when obtaining an electrically conductive molded body with excellent electrical conductivity using carbon nanotubes with high degrees of crystallinity, the carbon nanotube dispersion technique plays a very important role.

Though there are no specific limitations on the type of carbon nanotubes used under the present invention, in particular, it is preferable that they be linear carbon nanotubes with high degrees of crystallinity because of their high electrical conductivity. Carbon nanotubes with good linearity are carbon nanotubes that contain few defects and exhibit high degrees of crystallinity. The degree of crystallinity of a carbon nanotube can be evaluated using a Raman spectroscopic analysis. Of various laser wavelengths available for a Raman spectroscopic analysis, 532 nm is used here. The Raman shift observed near 1590 cm$^{-1}$ on the Raman spectrum is called the "G band", attributed to graphite, while the Raman shift observed near 1350 cm$^{-1}$ is called the "D band", attributed to defects in amorphous carbon or graphite. This means that the higher the G/D ratio, the ratio of the peak height of the G band to the peak height of the D band, the higher the linearity, the degree of crystallinity and hence of the quality of the carbon nanotube.

Though the higher the G/D ratio better, a carbon nanotube-containing composition is deemed high quality as long as this ratio is 30 or more, preferably 40 or more and more preferably 50 or more. Though there is no specific upper limit, the common range is 200 or less. When applied to solids, Raman spectroscopic analysis sometimes exhibits a scattering of measurements depending on sampling. For this reason, at least three different positions are subjected to a Raman spectroscopy analysis, and the arithmetic mean is taken.

A Raman spectroscopy analysis is performed by setting a powder specimen in a resonance Raman spectroscope (INF-300, manufactured by Horiba Jobin Yvon S.A.S.) and using a 532 nm laser for measurement. With the analysis covering three different locations, the heights of the G and D bands are measured and the ratio of the two heights is calculated as the G/D ratio. The arithmetic mean is then taken of the three results.

A carbon nanotube-containing composition is produced, for instance, in the manner described below.

A carbon nanotube-containing composition containing single-walled to quintuple-walled carbon nanotubes is obtained by placing a powdery catalyst of iron-supported magnesium in a vertical reaction vessel in such a manner as to cover a whole horizontal cross section of the reaction vessel, circulating methane in the reaction vessel in the vertical direction, and bringing the methane and the catalyst into contact at 500°C to 1,200°C to obtain a reaction product containing carbon nanotubes, followed by an oxidation treatment of the product.

A typical oxidation treatment involves the treatment of the pre-oxidation treatment carbon nanotube-containing composition with an oxidant selected from nitric acid, hydrogen peroxide or a mixed acid. Treating a carbon nanotube-containing composition with nitric acid means to mix the pre-oxidation treatment carbon nanotube-containing composition into, for instance, commercially available nitric acid (40 to 80 wt%) to a concentration of 0.001 wt% to 10 wt% and have it react for 0.5 to 50 hours at a temperature of 60°C to 150°C. Treating a carbon nanotube-containing composition with hydrogen peroxide means to mix the pre-oxidation treatment carbon nanotube-containing composition into, for instance, a commercially available 34.5% hydrogen peroxide solution to a concentration of 0.001 wt% to 10 wt% and have it react for 0.5 to 50 hours at a temperature of 0 to 100°C. Treating a carbon nanotube-containing composition with a mixed acid means to mix the pre-oxidation treatment carbon nanotube-containing composition into, for instance, a mixed solution of concentrated sulfuric acid (98 wt%)/concentrated nitric acid (40 to 80 wt%) (= 3/1) to a concentration of 0.001 wt% to 10 wt% and have it react for 0.5 to 50 hours at a temperature of 0°C to 100°C. The mixing ratio of the mixed acid may be set in the 1/10 to 10/1 range in terms of the concentrated sulfuric acid/concentrated nitric acid according to the amount of single-walled carbon nanotubes in the product.

Providing such an oxidation treatment makes it possible to selectively remove impurities, such as amorphous carbon, and single-walled CNTs with low heat resistance from the product and thus to improve the purity of single-walled to quintuple-walled carbon nanotubes, particularly double-walled to quintuple-walled ones. At the same time, the dispersibility of carbon nanotubes improves as their affinity for the dispersion medium and additives improves as a result of the functionalization of their surface. Of such oxidation treatments, treatment with nitric acid is particularly preferable.

The dispersion liquid of a carbon nanotube-containing composition of the present invention uses a polymer-based dispersant. This is because the use of a polymer-based dispersant makes it possible to highly disperse carbon nanotube in the solution and obtain a stable dispersion liquid high that withstands a high shear stress as well. In this instance, if the molecular weight of the dispersant is too small, bundles of carbon nanotubes cannot sufficiently be broken up as the interaction between the dispersant and carbon nanotubes is weak. If, on the other hand, the molecular weight of the dispersant is too large, it is difficult for the dispersant to get into the bundles of carbon nanotubes. As a result, the fragmentation of carbon nanotubes progresses before the breaking up of bundles during the dispersion treatment. The present invention has revealed that setting the weight-average molecular weight of the dispersant in the 5,000 to 60,000 range not only makes it possible to highly disperse carbon nanotubes in the solution but also is effective in suppressing the fragmentation of carbon nanotubes during the dispersion treatment. Setting its weight-average molecular weight in the 5,000 to 60,000 range facilitates the dispersant getting into the gaps between carbon nanotubes during dispersion, making it possible to disperse carbon nanotubes with a less amount of energy. This, in turn, helps highly disperse carbon nanotubes and suppresses the fragmentation of carbon nanotubes. Moreover, the coagulation of such carbon nanotubes is suppressed when they are applied to a base to coat it, so that the electrical conductivity and transparency the obtained electrically conductive molded body become mutually compatible. From the viewpoint of achieving good dispersibility with only a small amount of dispersant, it is preferable that the weight-average molecular weight of the dispersant be in the range of 10,000 to 60,000, more preferably 10,000 to 40,000. In this regard, "weight-average molecular weight" refers to weight-average molecular weight determined by gel permeation chromatography, as calibrated using a polyethylene glycol calibration curve.

Dispersants with a weight-average molecular weight of 5,000 to 60,000 can be obtained through synthesis aimed at bringing the weight-average molecular weight into this range or hydrolysis, etc. aimed at turning high-molecular weight dispersants into low molecular weight ones.

Methods to evaluate the stability of a dispersion liquid of a carbon nanotube-containing composition against high shear stress include the use of a rheometer aimed at evaluating the stability of a dispersion liquid when subjected to a strong continuous shear stress. Using a rheometer (MCR501, manufactured by Anton Paar GmbH), the gap between the stage and rotor for a smooth-action rotor (PP25) is set to 0.01 mm, and 0.3 mL of the dispersion liquid to be evaluated is loaded. After a high shear stress is applied to this dispersion liquid for 30 minutes at a shear velocity of 200,000 $s^{-1}$, the rotor is visually inspected. If the dispersion liquid of a carbon nanotube-containing composition does not exhibit coagulation, it is judged to be coagulation-free and stable even when it is subjected to a high shear stress.

It is preferable that the amount of dispersant contained in the dispersion liquid be greater than the amount of adsorbed by carbon nanotubes but not as much as the amount that would impede electrical conductivity. In concrete terms, the preferable amount of the dispersant is 200 to 500 parts by weight, more preferably 200 to 400 parts by weight, for 100 parts by weight of the carbon nanotube-containing composition.

By type, a dispersant may be selected from a synthetic polymer, natural polymer, and the like. Preferably, the synthetic polymer is a polymer selected from polyacrylic acid, polystyrene sulfonic acid or a derivative thereof. Preferably, the natural polymer is a polymer selected from a group of polysaccharides comprising alginic acid, chondroitin sulfuric acid, hyaluronic acid and cellulose, as well as a derivative thereof. A derivative means an esterification product, etherification product, salt or the like of any polymer specified above. Of these, the use of a polysaccharide is particularly preferable from the viewpoint of dispersibility improvement. Dispersants may be used singly or as a mixture of two or more. In light of the fact that a dispersant with good dispersibility improves transparent conductivity by breaking up bundles of carbon nanotubes, it is preferable that an ionic polymer be used as the dispersant. In particular, one having a sulfonic acid group, carboxylic acid group or other ionic functional group is preferable as it exhibits high dispersibility and electrical conductivity. Preferably, the ionic polymer is a polymer selected from polystyrene sulfonic acid, chondroitin sulfuric acid, hyaluronic acid, carboxymethyl cellulose and a derivative thereof. In particular, a polymer selected from carboxymethyl cellulose, which is a polysaccharide with an ionic functional group, and a derivative thereof is most preferable. As a derivative, a salt is preferable.

Carboxymethyl cellulose with a weight-average molecular weight of 60,000 or less is not commercially available. To obtain carboxymethyl cellulose with a weight-average molecular weight of 5,000 to 60,000, it is necessary to reduce the molecular size of carboxymethyl cellulose with a weight-average molecular weight of more than 60,000 through hydrolysis or some other method. There are no specific limitations on carboxymethyl cellulose used as input material, it is preferable to use a commercially available carboxymethyl cellulose that offers the lowest possible molecular weight. In concrete terms, a carboxymethyl cellulose with a weight-average molecular weight of 60,000 to 500,000 is preferable. This is because, if the weight-average molecular weight exceeds 500,000, carboxymethyl cellulose takes a long time to undergo a hydrolysis reaction, leading to the generation of large amounts of oxidation decomposition products of carboxymethyl cellulose, which, in turn, makes purification difficult.

It is preferable that the carboxymethyl cellulose obtained through hydrolysis have a degree of etherification of 0.4 to 1. A degree of etherification of less than 0.4 is not preferable as it makes carboxymethyl cellulose insoluble in water. If carboxymethyl cellulose has a high molecular weight, its interaction with the carbon nanotube-containing composition is small. For this reason, carboxymethyl cellulose with a degree of etherification of 1 or more is sometimes inadequate in terms of the effectiveness as a dispersant. Since the hydrolysis reaction of carboxymethyl cellulose just hydrolyzes -glycoside bonds, there is no change in the degree of etherification from before to after the reaction. For this reason, it is preferable that post-hydrolysis carboxymethyl cellulose used as input material have a degree of etherification of 0.4 to 1.

It is preferable that the hydrolysis reaction of carboxymethyl cellulose be conducted in water using the acid hydrolysis method. It is preferable that the hydrolysis reaction take place at a pH of 3 or less and a temperature of 100°C or more. If the temperature is lower than 100°C, a hydrolysis reaction does not proceed. In the case of conducting a reaction in a sealed pressure resistant vessel, an alternative condition of a pH of more than 3 and not more than 7 may be used, as well as heating to temperatures of 120°C or more. This is because compression makes it possible for a hydrolysis reaction to proceed at low acidity levels. There are no specific limitations on the atmosphere for the reaction, it is preferable that, where necessary, inert gas replacement be performed with nitrogen, argon, helium or the like. The reaction time differs according to the degree of molecular weight reduction. Adjusting the pH and reaction time makes it possible to obtain carboxymethyl cellulose with a desired molecular weight. Though there are no specific limitations on the type of acid used, sulfuric acid, nitric acid, hydrochloric acid, hydrogen peroxide, acetic acid or the like is preferable. Particularly preferable is sulfuric acid, which does not easily evaporate under heating conditions. To stop the reaction, a base is added until the pH rises to 7 or more. Though there are no specific limitations on the type of base, it is preferable that, when a strong acid is used, a weak base be used. Specific examples include ammonia, sodium hydrogen carbonate, ethyl amine, triethyl amine, propyl amine, and isopropyl amine. Of them, ammonia is preferable as it does not contain a metal ion or organic substance.

After a hydrolysis reaction comes to a stop, the aqueous solution of carboxymethyl cellulose often acquires a color. This is attributable to a structure change that carboxymethyl cellulose undergoes as it is oxidized during hydrolysis as a result of heating. It is therefore preferable that, after the hydrolysis reaction, by-products and salts generated during the winding up of the reaction be removed using the dialysis membrane method. For instance, the post-hydrolysis aqueous solution may be placed in a tube-shaped dialysis membrane and immersed in ion-exchanged water overnight at room temperature. Though the main purpose of the dialysis membrane method is demineralization, it also removes oxidation decomposition products of carboxymethyl cellulose as by-products as their molecular weights are below the cut-off level, with the color getting lighter in the process. When choosing a dialysis membrane, its cut-off molecular weight must be smaller than the molecular weight of the desired low-molecular weight carboxymethyl cellulose. The larger the difference between the molecular weight of the desired low-molecular weight carboxymethyl cellulose and the cut-off molecular weight, the more efficient the purification process becomes. In concrete terms, a dialysis membrane with a cut-off molecular weight of 100 to 10,000 is preferable. A more preferable range of cut-off molecular weight is 1,000 to 5,000.

A low-molecular weight carboxymethyl cellulose obtained through a dialysis membrane treatment as described above is subjected to a measurement of absorbance at wavelength 280 nm on the ultraviolet-visible absorption spectrum. It is then preferable that, where the absorbance at 280 nm of a commercially available carboxymethyl cellulose to be used as input material is 1, the post-dialysis membrane treatment carboxymethyl cellulose exhibit an absorbance ratio of 10 or less. As long as this absorbance ratio is 10 or less, the carboxymethyl cellulose becomes more or less colorless and transparent, and is capable of maintaining transparency when used as a dispersant during the production of a transparent conductive material.

From before to after hydrolysis, the molecular weight distribution (Mw/Mn) hardly changes, largely maintaining the value held by the carboxymethyl cellulose used as input material. When used as a dispersant, its molecular weight distribution is preferably 2 or less from the viewpoint of the dispersion stability of the carbon nanotube-containing composition.

Under the present invention, a carbon nanotube dispersion liquid is prepared from a carbon nanotube-containing composition, dispersant and aqueous solvent. The dispersion liquid may be liquid or semisolid (e.g. as a paste or gel) though liquid is preferable. It is preferable that the dispersion liquid be free from precipitates or aggregates during a visual inspection, and remains so even after being left to stand for at least 24 hours.

The aqueous solvent is water or an organic solvent that mixes with water. Any such solvent may be used as long as it is capable of dissolving a dispersant and dispersing carbon nanotubes. Examples of an organic solvent that mixes with water include an ether (e.g. dioxane, tetrahydrofuran or methyl cellosolve), an ether alcohol (e.g. ethoxyethanol or methoxy ethoxy ethanol), an alcohol (e.g. ethanol, isopropanol, phenol), a low carboxylic acid (e.g. acetic acid), an amine (e.g. triethyl amine or trimethanol amine), a nitrogen-containing polar solvent (e.g. N,N-dimethyl formamide, nitro methane or N-methyl pyrolidone, acetonitrile), and a sulfur compound (e.g. dimethyl sulfoxide).

Of these, it is particularly preferable that water, alcohol, ether or a solvent that combines them be contained from the viewpoint of the dispersibility of carbon nanotubes. Water is still more preferable. It is preferable that a dispersion liquid of a carbon nanotube-containing composition be alkaline, more preferably with the pH in the range of 8 to 12, particularly 9 to 11. Setting the pH of the dispersion liquid in the alkaline range increases the electrostatic repellance among dispersant particles or carbon nanotubes, and this is believed to improve dispersibility and stability against high shear stress. The pH may be adjusted by adding an alkaline solution. As the alkaline solution, a solution of ammonia or an organic amine is used. Examples of a preferable organic amine include ethanol amine, ethyl amine, n-propyl amine, isopropyl amine, diethyl amine, triethyl amine, ethylene diamine, hexamethylene diamine, hydrazine, pyridine, piperidine, and hydroxypiperidine. Of ammonia and such organic amines, the most preferable is ammonia. It is preferable that water be used as the solvent for dissolving an organic amine or ammonia. The pH is measured using a pH meter (HM-30S manufactured by DKK-TOA Corporation).

Though there are no specific limitations on the concentration of the carbon nanotube-containing composition during the preparation of a dispersion liquid of a carbon nanotube-containing composition, the 0.1 mass% to 0.3 mass% range is preferable. If the concentration is lower than 0.1 mass%, energy transfer to the carbon nanotube-containing composition becomes large during dispersion and this promotes the fragmentation of carbon nanotubes. If, on the other hand, the concentration is higher than 0.3 mass%, energy is not sufficiently transferred to the carbon nanotube-containing composition during dispersion, and this makes dispersion difficult.

As a method to prepare a dispersion liquid of a carbon nanotube-containing composition, one in which a carbon nanotube-containing composition, dispersant and solvent are mixed and dispersed using a general mixing and dispersing machine for paint production (e.g. a vibration mill, planetary mill, ball mill, bead mill, sand mill, jet mill, roll mill, homogenizer, ultrasonic homogenizer, high-pressure homogenizer, ultrasonic device, attritor, dissolver, or paint shaker). The use of an ultrasonic homogenizer is particularly preferable as it improves the dispersibility of the carbon nanotube-containing composition. Though the carbon nanotube-containing composition to be dispersed may be either in dried state or solvent-containing state, it is preferable that it be dispersed in a solvent-containing state, rather than being dried after purification, as it improves dispersibility.

Apart from a dispersant, carbon nanotube-containing composition and solvent as described above, a dispersion liquid of a carbon nanotube-containing composition may contain other ingredients, such as a surface active agent, electrically conductive polymer, non-electrically conductive polymer and various other polymer materials to the extent that the advantageous effect of the invention is not undermined.

A dispersion liquid of a carbon nanotube-containing composition of the present invention may be used to prepare an electrically conductive molded body, comprising a base and an electrically conductive layer containing the carbon nanotube-containing composition which is formed on top of the base, by applying it to the base as a coat using a method described hereinafter.

There are no specific limitations on the shape, size or material of the base, as long as it can be amenable to coating with a carbon nanotube dispersion liquid and allows the resulting electrically conductive layer to stick to it, so that a selection can be made according to the purpose. Examples include a film, sheet, plate, paper, fiber, and particles. The material of a base may, for instance, be selected from resins of organic materials, such as polyester, polycarbonate, polyamide, acrylic, polyurethane, polymethyl methacrylate, cellulose, triacetyl cellulose and amorphous polyolefin. In the case of inorganic materials, available choices include metals, such as stainless steel, aluminum, iron, gold and silver, glass, and carbon-based materials. Using a resin film as a base is preferable as it makes it possible to obtain an electrically conductive film with excellent adhesiveness, conformity to tensile deformation and flexibility. There are no specific limitations on the thickness of a base, so that it can, for instance, be chosen from the approximate range of 1 to 1,000 $\mu$m. In a preferred embodiment, the thickness of a base has been set in the approximate range of 5 to 500 $\mu$m. In a more preferred embodiment, the thickness of a base has been set in the approximate range of 10 to 200 $\mu$m.

If necessary, a base may undergo a corona discharge treatment, ozone treatment, or glow discharge or other surface hydrophilization treatment. It may also be provided with an undercoat layer. It is preferable that the material for the undercoat layer be highly hydrophilic.

A base that has been provided with a hard coat treatment, designed to impart wear resistance, high surface hardness, solvent resistance, pollution resistance, anti-fingerprinting and other chracteristics, on the side opposite to the one coated with a carbon nanotube dispersion liquid.

The use of a transparent base is preferable as it makes it possible to obtain an electrically conductive molded body with excellent transparency and electrical conductivity. A transparent base exhibits a total light transmittance or more 50% or more.

After forming an electrically conductive molded body by coating a base with a carbon nanotube dispersion liquid of the present invention, it is preferable that the electrically conductive layer containing carbon nanotubes be overcoated with a binder material. Overcoating is effective in dispersing and mobilizing electric charges.

A binder material may be added to the carbon nanotube dispersion liquid and, if necessary, dried or baked (hardened) through heating after the coating of the base. The heating conditions are set according to the binder material used. If the binder is light-curable or radiation-curable, it is cured through irradiation with light or energy rays, rather than heating, after the coating of the base. Available energy rays include electron rays, ultraviolet rays, x-rays, gamma rays and other ionizing radiation rays. The exposure dose is determined according to the binder material used.

There are no specific limitations on the binder material as long as it is suitable for use in an electrical conductivity paint, so that various transparent inorganic polymers and precursors thereof (hereinafter may be referred to as "inorganic polymer-based binders") and transparent organic polymers and precursors thereof (hereinafter may be referred to as "organic polymer-based binders") are all available options.

Examples of an inorganic polymer-based binder include a sol of a metal oxide, such as silica, oxidized tin, aluminum oxide or zirconium oxide, or hydrolysable or pyrolyzable organometallic compound which is a precursor to any such inorganic polymer (e.g. an organic phosphorus compound, organic boron compound, organic silane compound, organic titanium compound, organic zirconium compound, organic lead compound or organic alkaline earth metal compound). Concrete examples of a hydrolysable or pyrolyzable organometallic compound include a metal alkoxide or partial hydrolysate thereof, a low carboxylate, such as a metal salt of acetic acid, or a metal complex, such as an acetylacetone complex.

Firing any such inorganic polymer-based binder results in the formation of a transparent inorganic polymer film or matrix based on an oxide or composite oxide. An inorganic polymer generally exhibits a glass-like quality with high hardness, excellent abrasion resistance and high transparency.

An organic polymer-based binder can be of any type, including thermoplastic, thermosetting or radiation-curable with ultraviolet rays, electron rays, etc. Examples of a suitable organic binder include a polyolefin (e.g. polyethylene or polypropylene), polyamide (e.g. nylon 6, nylon 11, nylon 66 or nylon 6,10), polyester (e.g. polyethylene terephthalate or polybutylene terephthalate), silicone resin, vinyl resin (e.g. polyvinyl chloride, polyvinylidene chloride, polyacrylonitrile, polyacrylate, polystyrene derivative, polyvinyl acetate or polyvinyl alcohol), polyketone, polyimide, polycarbonate, polysulfone, polyacetal, fluorine resin, phenol resin, urea resin, melamine resin, epoxy resin, polyurethane, cellulose-based polymer, protein (gelatin or casein), chitin, polypeptide, polysaccharides, polynucleotide or other organic polymer or a precursor any such polymer (monomer or oligomer). These are all capable of forming a transparent film or matrix through simple solvent evaporation or heat or energy ray irradiation curing.

Of these, preferable organic polymer-based binders are compounds having unsaturated bonds amenable to radical polymerization and curing via radiation, namely, monomers, oligomers and polymers having vinyl or vinylidene groups. Examples of such a monomer include a styrene derivative (e.g. styrene or methyl styrene), acrylic acid or methacrylic acid or a derivative thereof (e.g. an alkyl acrylate, or methacrylate, allyl acrylate or methacrylate), vinyl acetate, acrylonitrile and itaconate. Preferable oligomers and polymers are compounds having double bonds in their backbone chains and compounds having an acryloyl or methacryloyl group at both ends of linear chains. Any radical polymerization-curable binder is capable of forming a film or matrix having high hardness, excellent abrasion resistance and high transparency.

The suitable amount of a binder to be used is such that it is sufficient to provide an overcoat or, in the case of being blended into the dispersion liquid, give suitable viscosity for the coating of the base. Too small an amount makes application difficult, but too large an amount is also undesirable as it impedes electrical conductivity.

There are no specific limitations on the method to coat a base with a carbon nanotube dispersion liquid. Any generally known coating method, such as micro gravure coating, wire bar coating, die coating, spray coating, dip coating, roll coating, spin coating, doctor knife coating, kiss coating, slit coating, slit die coating, gravure coating, blade coating or extrusion coating, as well as screen printing, gravure printing, ink jet printing, pad printing or other type of printing, may be used. Coating may take place as many times as possible and two different coating methods may be combined. Most preferably, the coating method is selected from micro gravure coating, die coating and wire bar coating.

There are no specific limitations on the coating thickness of the carbon nanotube dispersion liquid (wet thickness) as long as the desired electrical conductivity can be obtained, since the suitable length depends on, among other things, the concentration of the liquid. Still, it is preferable that the thickness be in the 0.01 $\mu$m to 50 $\mu$m range, more preferably in the 0.1 $\mu$m to 20 $\mu$m range.

After coating of a base with a carbon nanotube dispersion liquid, the solvent is removed using an air drying, heating, pressure reduction or other method to obtain an electrically conductive layer. This process lets carbon nanotubes form a three-dimensional mesh structure and enables them to stick to the base. In this manner, an electrically conductive molded body, comprising a base and an electrically conductive layer containing carbon nanotubes which is formed on top of the base, is prepared. The preferable method to remove the solvent is drying by heating. The drying temperature may be any temperature as long as it is high enough for the removal of the solvent but not higher than the heat resistant temperature of the base. In the case of a resin-based base, it is preferably 0°C to 250°C and more preferably 15°C to 150°C.

Though there are no specific limitations on the thickness of the post-drying electrically conductive layer containing carbon nanotubes (dry thickness) as long as the desired electrical conductivity can be obtained, it is preferable that the thickness be in the 0.001 $\mu$m to 5 $\mu$m range, more preferably, in the 0.001 to 1 $\mu$m range. Dry thickness can be measured by observing the cross section of the electrically conductive molded body. Observation can be performed using, for instance, a transmission microscope, if necessary by staining the measurement specimen.

An electrically conductive molded body of the present invention is an electrically conductive molded body featuring a base and an electrically conductive layer formed on top of it, wherein the electrically conductive layer contains a carbon nanotube-containing composition and a dispersant with a weight-average molecular weight of 5,000 to 60,000 as measured by gel permeation chromatography, and wherein the coagulation diameter and average length of the carbon nanotube-containing composition are 1 nm to 4.5 nm and 3.5 $\mu$m to 6 $\mu$m, respectively.

An electrically conductive molded body of the present invention is obtained by coating a base with a dispersion liquid of a carbon nanotube-containing composition of the present invention. With an electrically conductive molded body of the present invention, the coagulation of carbon nanotubes, brought about in the course of the carbon nanotube dispersion liquid coming into contact with the base and the solvent being removed, is suppressed. By using a dispersion liquid containing carbon nanotube-containing composition, a dispersant with a weight-average molecular weight of 5,000 to 60,000 as measured by gel permeation chromatography and an aqueous solvent, the present invention is able to highly disperse carbon nanotubes and prevent the coagulation of carbon nanotubes over the surface of the base.

Providing a highly hydrophilic undercoat layer on the surface of the base to be coated with a carbon nanotube dispersion liquid is also a preferable method from the viewpoint of prevent the coagulation of carbon nanotubes over the surface of the base. In concrete terms, it is preferable that the material of the undercoat layer be a hydrophilic inorganic oxide, particularly an inorganic oxide selected from silica, alumina and titania. These materials are advantageous as they have hydrophilic groups on the surface in the form of hydroxyl groups and therefore highly hydrophilic. The undercoat layer may also be a complex of any such inorganic oxide and a resin, e.g. a complex of fine silica particles and polysilicate. Making the surface of the base hydrophilic allows the highly dispersed carbon nanotubes in the dispersion liquid to be transferred to the surface of the base and thus helps maintain high carbon nanotube dispersibility.

It is also preferable that, as described above, the electrically conductive layer containing carbon nanotube be overcoated with a binder material to form an overcoating layer over the electrically conductive layer. Overcoating is effective in dispersing and mobilizing electric charges.

As described above, a binder material may also be blended into the carbon nanotube-containing composition dispersion liquid. In this case, the binder material forms part of the electrically conductive layer like a carbon nanotube-containing composition and dispersant.

It is preferable that from the viewpoint of measuring accuracy, the suppression of coagulation be verified by measurement using a scanning electron microscope, which allows the coagulation diameter of the carbon nanotube-containing composition on the base to be observed without depositing metal. Though there are no specific limitations on the thickness of the carbon nanotube layer during the measurement of the coagulation diameter, it is preferable that, in view of carbon nanotube density, the coagulation diameter be measured in the total light transmittance range of $87 \pm 1$ %.

Under the present invention, it is preferable that the coagulation diameter of the carbon nanotube-containing composition on the base be in the 1 nm to 4.5 nm range. In the case of double-walled carbon nanotubes, a coagulation diameter of about 2 nm represents one carbon nanotube, so that a coagulation diameter of 4.5 nm amounts to about 2.3 carbon nanotubes. The coagulation diameter of a carbon nanotube-containing composition as measured on a base is roughly equal to the dispersion diameter of the carbon nanotube-containing composition in the dispersion liquid. The dispersion diameter of a carbon nanotube-containing composition in a dispersion liquid be measured using an atomic force microscope, the same method as the one used for the measurement of the length of a carbon nanotube-containing composition as described above.

It is preferable that the average length of a carbon nanotube-containing composition on a base be in the 3.5 $\mu$m to 6 $\mu$m range. The average length of a carbon nanotube-containing composition is preferably 3.5 $\mu$m or more because, if it is too small, an electrically conductive path cannot efficiently be formed. The average length of a carbon nanotube-containing composition is preferably 6 $\mu$m or less because, if it is too large, dispersibility tends to be small. The average length of a carbon nanotube-containing composition on a base may be measured in the manner described above using a pre-application dispersion liquid of the carbon nanotube-containing composition.

The present invention makes it possible to highly disperse carbon nanotube and suppresses their fragmentation during dispersion by setting the weight-average molecular weight of the dispersant in the 5,000 to 60,000 range. Moreover, it also makes it possible to suppress the coagulation of carbon nanotubes upon being applied to a base as part of a coat and thus successfully keeps the coagulation diameter and average length of the carbon nanotube-containing composition with specified ranges as specified above. An electrically conductive molded body of the present invention exhibit excellent electrical conductivity and transparency as carbon nanotubes in the electrically conductive layer are sufficiently dispersed and thus provide adequate electrical conductivity even if present in a small amount.

In the case of using a transparent base, the total light transmittance of the electrically conductive molded body is 50% or more. It is preferable that the total light transmittance of an electrically conductive molded body be 60% or more, more preferably 70% or more, even more preferably 80% or more and the most preferably 90% or more.

The surface resistance of an electrically conductive molded body is preferably $10^0$ to $10^4$ $\Omega/\square$ and more preferably $10^0$ to $10^3$ $\Omega/\square$.

The total light transmittance of an electrically conductive molded body is represented by the value measured by setting the electrically conductive molded body in a haze meter (NDH4000, manufactured by Nippon Denshoku Industries Co., Ltd.).

The surface resistance is represented by the value measured in accordance with the four-probe method as specified in JIS K7194 (1994) using a Loresta (registered trademark) resistance meter (EP MCP-T360, manufactured by Dia Instruments Co., Ltd.).

If the amount of a carbon nanotube dispersion liquid applied to a base as a coat is large, the surface resistance tends to be low, and, if it is small, the surface resistance tends to be high. For this reason, the surface resistance of an electrically conductive molded body can be easily adjusted by changing the coating amount. However, light transmittance and surface resistance are mutually exclusive because if the coating amount is decreased to increase light transmittance, surface resistance increases, and if the coating amount is increased to lower the surface resistance, light transmittance decreases. In this regard, a dispersion liquid of a carbon nanotube-containing composition of the present invention makes it possible to obtain an electrically conductive molded body with excellent electrical conductivity and transparency as it is able to decrease the surface resistance of the electrically conductive layer while maintaining the dispersibility of carbon nanotubes. As a result, it is possible to obtain an electrically conductive molded body with a surface resistance of $10^0$ to $10^4$ $\Omega/\square$ or less and a total light transmittance at 550 nm of 70% or more. It is even possible to obtain an electrically conductive molded body with both a surface resistance of $10^0$ to $10^3$ $\Omega/\square$ or less and a total light transmittance of 80% or more.

An electrically conductive molded body obtained by applying a dispersion liquid of a carbon nanotube-containing composition of the present invention as a coat exhibits high electrical conductivity, so that it can be used as cleanroom parts, such as static dissipative shoes and anti-static plates, and display/automobile parts, such as electromagnetic shielding materials, near-infrared blocking materials, transparent electrodes, touch panels and radio wave absorbing materials. Of these, it particularly exhibits excellent performance as touch panels, mainly required to satisfy smooth surface needs, and display-related transparent electrodes, found in liquid crystal displays, organic electroluminescence displays, electronic paper, and the like.

The present invention is now described in more detail using examples. However, the present invention is not considered limited to such examples.

Examples

Evaluation methods used in the examples are as follows:

<Evaluation of dispersant>

[Measurement of weight-average molecular weight of dispersant]

The weight-average molecular weight of a dispersant was determined by gel permeation chromatography, as calibrated using a polyethylene glycol calibration curve.

Equipment: LC-10A series, manufactured by Shimadzu Corporation
Column: GF-7M HQ, manufactured by Showa Denko K.K.
Mobile phase: 10 mmol/L aqueous solution of lithium bromide
Flow rate: 1.0 mL/min
Detector: Differential refractometer
Column temperature: 25°C.

[Ultraviolet-visible absorption spectrum] The absorbance of the dispersant (sodium carboxymethyl cellulose) was measured in the following manner: Carboxymethyl cellulose sodium was dissolved in ion-exchanged water to prepare a 0.1% aqueous solution, and an absorbance measurement was conducted. The absorbance observed at the wavelength 280 nm was used as a representative value. The absorbance of a 1% aqueous solution of the pre-hydrolysis sodium carboxymethyl cellulose to be used as input material was set to 1, and the absorbance of the post-hydrolysis sodium carboxymethyl cellulose was evaluated as a ratio thereto.

[Degree of etherification measurement method]

The degree of etherification of a dispersant (sodium carboxymethyl cellulose) was measured in the following manner: A gram of sodium carboxymethyl cellulose and 200 g of ion-exchanged water 200 g were placed in an Erle nmeyer flask, and 5mL of 0.05 mol/L sulfuric acid (manufactured by Wako Pure Chemical Industries, Ltd.) was added, followed by 10 minutes of boiling. After cooling, three drops of a 1.0wt% phenolphthalein ethanol solution (manufactured by Wako Pure Chemical Industries, Ltd.) were added, and a titration of performed using a 0.1 mol/L aqueous solution of potassium hydroxide (manufactured by Wako Pure Chemical Industries, Ltd.). At the same time, a blank test was conducted by following the same procedure as above without the use of sodium carboxymethyl cellulose. The alkalinity or acidity was then calculated using the following formula:

$$\text{Alkalinity} = (B-S)f1$$

B: Amount of 0.1 mol/L aqueous solution of potassium hydroxide dropped (mL) during blank test
S: Amount of 0.1 mol/L aqueous solution of potassium hydroxide dropped when sodium carboxymethyl cellulose was used (mL)
f1: Titer of 0.1 mol/L aqueous solution of potassium hydroxide When the value of (B-S)f was negative, alkalinity was interpreted as acidity.

Next, 0.7 g of sodium carboxymethyl cellulose was wrapped in filter paper and placed in a porcelain crucible, followed by one-hour heating at 700°C. After cooling, the contents of the porcelain crucible was transferred to a beaker, and 250 g of ion-exchanged water and 35 mL of 0.05 mol/L sulfuric acid (manufactured by Wako Pure Chemical Industries, Ltd.) were added followed by 30 minutes of boiling. After cooling again, three drops of a 1.0wt% phenolphthalein ethanol solution (manufactured by Wako Pure Chemical Industries, Ltd.) were added, and a back titration was performed using 0.1 mol/L potassium hydroxide (manufactured by Wako Pure Chemical Industries, Ltd.), with the degree of etherification calculated using the following formula:

$$\text{Degree of etherification} = 162 \times A / (10000 - 80A)$$

$A= (35 \times f2 - bf1) / 0.7$ - alkalinity value (or + acidity value)
b: Amount of 0.1 mol/L aqueous solution of potassium hydroxide dropped (mL)
f1: Titer of 0.1 mol/L aqueous solution of potassium hydroxide
f2: Titer of 0.05 mol/L sulfuric acid.

<Evaluation of carbon nanotube-containing composition>

[Thermal analysis]

Approx. 1mg of the specimen is set in differential heat analysis equipment (DTG-60, manufactured by Shimadzu Corporation) and heated from room temperature to 900°C at a heating rate of 10°C/min and an air supply rate of 50 ml/min. The peak combustion temperature due to heat accumulation was then read off the DTA curve.

[Raman spectroscopy analysis]

A powder specimen was set in a resonance Raman spectroscope (INF-300, manufactured by Horiba Jobin Yvon S.A.S.), and a measurement was performed using a 532 nm laser. To obtain the G/D ratio, an analysis was conducted for three different locations of the sample, with the arithmetic mean taken of the results.

[High-resolution transmission electron microscope photography]

A milligram of a carbon nanotube-containing composition was added to 1 mL of ethanol, and a dispersion treatment was performed for about 15 minutes using an ultrasonic bath. A few drops of the dispersed specimen were applied to a grid and dried. Coated with the specimen in this manner, the grid was set in a transmission electron microscope (JEM-2100, manufactured by JEOL Ltd.), and measurements were performed using magnifications of $50,000\times$ to $500,000\times$. Observations of carbon nanotubes for outside diameter distribution and number of walls distribution, on the other hand, were performed at $400,000\times$. The acceleration voltage was 120kV.

<Evaluation of carbon nanotube-containing composition paste>

[Measurement of particle diameter of carbon nanotube-containing composition in carbon nanotube-containing composition paste]

A carbon nanotube-containing composition paste was diluted with water by a factor of 50, and the particle diameter of the carbon nanotube-containing composition was measured using a particle size analyzer (ELS-Z2, manufactured by Otsuka Electronics Co., Ltd.). With the refractive index and viscosity of water input in advance, a measurement was performed three times under 25°C setting. Following an analysis based on the cumulant method, the average was taken of the obtained three measurements for use as the particle diameter.

<Evaluation of dispersion liquid of carbon nanotube-containing composition>

[Measurement by atomic force microscope of average diameter of carbon nanotubes in carbon nanotube dispersion liquid]

Thirty microliters of a dispersion liquid of a carbon nanotube-containing composition whose carbon nanotube concentration had been adjusted to 0.003 mass% was placed on a mica substrate, and the substrate was spin-coated for 60 seconds at a rotating speed of 3,000 rpm. After this, the diameters of 100 randomly chosen carbon nanotubes present in a bundle or solitary state were measured using an atomic force microscope (SPM9600M, manufactured by Shimadzu Corporation), and the average diameter was calculated by taking the arithmetic average of the measurements.

[Measurement by atomic force microscope of average length of carbon nanotubes in carbon nanotube dispersion liquid]

Thirty microliters of a dispersion liquid of a carbon nanotube-containing composition whose carbon nanotube concentration had been adjusted to 0.003 mass% was placed on a mica substrate, and the substrate was spin-coated for 60 seconds at a rotating speed of 3,000 rpm. After this, the lengths of approx. 100 carbon nanotubes whose diameters are equal to or smaller than the average diameter measured using an atomic force microscope (SPM9600M, manufactured by Shimadzu Corporation) as described above were measured by regarding such carbon nanotubes as in a solitary state, and the average length was calculated by taking the arithmetic average of the measurements

<Evaluation of electrically conductive molded body>

[Measurement of bundle diameter on transparent base]

Using a scanning electron microscope (Hitachi, SU8000), which allows observations to be made without depositing metal, five field of views-worth of observation of a sample with a light transmittance of 87±1% at the wavelength 550 nm was made at an accelerating voltage of 2.0 kV and a magnification of 100,000×. Each obtained microscopic image was divided into four parts of equal size by drawing three vertical lines, and the coagulation diameters of 80 to 100 carbon nanotubes found to intersect with the three lines were measured, with the average of the measurements calculated. In the case of the number of carbon nanotubes found to intersect with the three line falling short of 50, four vertical lines were added by drawing them between each adjacent pair of the three original lines, and measurements were made in a similar manner to before.

[Measurement of light transmittance]

Light transmittance was measured in terms of total light transmittance by setting a film coated with a carbon nanotube dispersion liquid in a haze meter (NDH4000, manufactured by Nippon Denshoku Industries Co., Ltd.).

[Measurement of surface resistance]

Surface resistance was measured using a Loresta (registered trademark) resistance meter (EP MCP-T360, manufactured by Dia Instruments Co., Ltd.) in accordance with the four-probe method as specified in JIS K7149, adopted in December 1994. In the case of high resistance measurement, a Hiresta (registered trademark) resistance meter (UP MCP-HT450, manufactured by Dia Instruments Co., Ltd., 10V, 10 seconds) was used.

(Reference example 1) Production of carbon nanotube-containing composition

(Preparation of catalyst)

Approx. 24.6 g of ammonium iron(III) citrate (manufactured by Wako Pure Chemical Industries, Ltd.) was dissolved in 6.2 kg of ion-exchanged water. After adding approx. 1,000 g of magnesium oxide (MJ-30, Iwatani Chemical Industry Co., Ltd.), the solution was subjected to a vigorous stirring treatment for 60 minutes using an agitator, and the suspension was introduced into a 10 L autoclave. During this step, 0.5kg of ion-exchanged water was used as flushing liquid. While in a sealed state, the suspension was heated to 160°C and held at that temperature for 6 hours. Subsequently, the autoclave was left to stand to cool, and a slurry-like clouded substance was taken out it, with excess moisture removed through suction filtration. The small amount of water still left in the filter cake was removed through heat drying in a 120°C drier. Bit by bit, the resulting solid was ground into fine particles in a mortar and put through a sieve to retrieve a catalyst consisting of particles ranging from 10 mesh to 20 mesh in diameter. This particular catalyst was introduced into an electric furnace and heated for 3 hours at 600°C under atmospheric conditions. The bulk density of the obtained catalyst was 0.32g/mL. Meanwhile, the filtrate of the above suction filtration process was analyzed using an energy dispersing x-ray analyzer (EDX) but iron was not detected. This confirms that the whole amount of the ammonium iron(III) citrate added was carried by magnesium oxide. According to the EDX analysis results of the catalyst, the iron content of the catalyst was 0.39wt%.

(Production of carbon nanotubes)

Carbon nanotubes were synthesized using the above catalyst. A 132 g portion of the solid catalyst was weighed out and introduced onto a sintered quartz plate in the central region of a reaction tube installed in the vertical direction to form a catalyst layer. While heating the catalyst layer to raise the temperature in the reaction tube to about 860°C, nitrogen gas was supplied at a rate of 16.5 L/min from the bottom of the reaction vessel towards the top of the reaction vessel so that it passed through the catalyst layer. Subsequently, while continuing the supply of nitrogen gas, methane gas was introduced at 0.78 L/min for 60 minutes so that it passed through the catalyst layer and undergo the reaction. Then, the supply of methane gas was stopped and the reaction tube was cooled to room temperature while supplying nitrogen gas at 16.5 L/min to produce a catalyst-containing carbon nanotube composition. A 129 g portion of this catalyst-containing carbon nanotube composition was put in 2,000 mL of a 4.8N aqueous solution of hydrochloric acid, followed by stirring for 1 hour to dissolve iron (i.e., the catalyst metal) and magnesium oxide (i.e., the carrier thereof). The resulting black suspension was filtered and the separated material was put again in 400 mL of a 4.8N aqueous solution of hydrochloric acid to remove magnesium oxide and filtered. This procedure was performed three times repeatedly to provide a catalyst-free carbon nanotube composition.

(Oxidation treatment of carbon nanotubes)

The carbon nanotube-containing composition obtained above was added to an about 300-fold weight of concentrated nitric acid (manufactured by Wako Pure Chemical Industries, Ltd., 1st grade assay 60 to 61%). Subsequently, it was heated under reflux while stirring in an oil bath at about 140°C for 24 hours. After the heating under reflux, the nitric acid solution containing the carbon nanotube-containing composition was diluted twice with ion-exchanged water and suction-filtered. It was rinsed in ion-exchanged water repeatedly until the separated suspension became neutral and the carbon nanotube-containing composition in a water-containing wet state was stored. Observation of this carbon nanotube-containing composition by high resolution transmission electron microscopy showed that the average outside diameter was 1.7 nm. In addition, double-walled carbon nanotubes accounted for 90%. The Raman spectroscopic G/D ratio, measured at a wavelength of 532 nm, was 80 and the flammability peak temperature was 725°C.

(Reference example 2) Production of carboxymethyl cellulose with a weight-average molecular weight of 35,000

In a three-necked flask, 500 g of a 10 mass% aqueous solution of sodium carboxymethyl cellulose (Cellogen (registered trademark) 5A, manufactured by Dai-Ichi Kogyo Seiyaku Co., Ltd. (weight-average molecular weight 80,000)) was poured and the aqueous solution was adjusted to pH2 with 1st grade sulfuric acid (manufactured by Kishida Chemical Co., Ltd.). This container was transferred to an oil bath heated at 120°C and the aqueous solution was stirred while heating under reflux for 9 hours for hydrolysis. After leaving the three-necked flask to cool, a 28% aqueous ammonia solution (manufactured by Kishida Chemical Co., Ltd.) was added to adjust the aqueous solution to pH10, thereby stopping the reaction. The weight-average molecular weight of sodium carboxymethyl cellulose after the end of hydrolysis was determined by gel permeation chromatography based on a polyethylene glycol calibration curve. Results showed that the weight-average molecular weight was about 35,000 and the molecular weight distribution (Mw/Mn) was 1.5. The yield was 97%.

It is also possible, if necessary, to remove ammonium sulfate from the sodium carboxymethyl cellulose resulting from the above operation. A 20 g portion of a 10 mass% aqueous solution of sodium carboxymethyl cellulose (weight-average molecular weight 35,000) was put in a dialysis tube (Biotech CE Dialysis Tube, manufactured by Spectrum Laboratories, Inc. (cut-off molecular weight 3,500-5,000D, 16 mm diameter)) cut to 30 cm and dialysis was performed by leaving this dialysis tube to float on 1,000 g of ion-exchanged water in a beaker for 2 hours to ensure. Subsequently, the water in the beaker was replaced with 1,000 g of new ion-exchanged water, followed by additional dialysis for 2 hours. This procedure was performed three times repeatedly so that dialysis was performed for a total of 12 hours in a beaker containing 1,000 g of repeatedly replaced ion-exchanged water. The aqueous solution of sodium carboxymethyl cellulose was taken out of the dialysis tube, condensed under reduced pressure using an evaporator, and dried in a freeze dryer, resulting in powdery sodium carboxymethyl cellulose with a yield of 70%. The weight-average molecular weight determined by gel permeation chromatography was almost the same as that determined before dialysis. With respect to the peak area in the gel permeation chromatography spectrum, the sodium carboxymethyl cellulose before dialysis gave a peak area of 57%, whereas after dialysis, the ammonium sulfate gave a decreased peak area and the sodium carboxymethyl cellulose gave an increased peak area of 91%. Furthermore, the absorbance at a wavelength of 280 nm in the ultraviolet-visible absorption spectrum was 20 times as large before dialysis but decreased to 2 times as large after dialysis as that of the 0.1 wt% aqueous solution of sodium carboxymethyl cellulose (Cellogen (registered trademark) 5A, manufactured by Dai-Ichi Kogyo Seiyaku Co., Ltd., (weight-average molecular weight 80,000)) used as input material. The degree of etherification of sodium carboxymethyl cellulose was not changed by the hydrolysis and stayed at 0.7.

(Reference example 3) Production of carboxymethyl cellulose with a weight-average molecular weight of 45,000

Except for performing the hydrolysis reaction for 6 hours, the same procedure as in Reference example 2 was carried out to produce carboxymethyl cellulose with a weight-average molecular weight of 45,000.

(Reference example 4) Production of carboxymethyl cellulose with a weight-average molecular weight of 54,000

Except for performing the hydrolysis reaction for 3 hours, the same procedure as in Reference example 2 was carried out to produce carboxymethyl cellulose with a weight-average molecular weight of 54,000.

(Reference example 5) Production method for carboxymethyl cellulose with a weight-average molecular weight of 18,000

Except for performing the hydrolysis reaction at pH1 for a reaction time of 6 hours, the same procedure as in Reference example 2 was carried out to produce carboxymethyl cellulose with a weight-average molecular weight of 18,000 and a molecular weight distribution (Mw/Mn) of 1.5. The yield was 96%.

(Reference example 6) Production method for carboxymethyl cellulose with a weight-average molecular weight of 8,000

Except for performing the hydrolysis reaction at pH0.5 for a reaction time of 3 hours, the same procedure as in Reference example 2 was carried out to produce carboxymethyl cellulose with a weight-average molecular weight of 8,000 and a molecular weight distribution (Mw/Mn) of 1.5. The yield was 96%.

(Reference example 7) Production of electrically conductive molded body

(Formation of undercoat layer)

An undercoat layer containing polysilicate as binder and fine particles of hydrophilic silica with a diameter of about 30 nm exposed at the surface is formed on a base by the procedure described below. Mega Aqua (registered trademark) Hydrophilic DM Coat (DM-30-26G-N1, manufactured by Ryowa Corporation), which contains fine hydrophilic silica particles of about 30 nm and polysilicate at a solid content of 1 mass%, was used as coating liquid for the formation of a undercoat layer. A wire bar of #4 was used to apply the above coating liquid to a polyethylene terephthalate (PET) film (Lumirror (registered trademark) U46, manufactured by Toray Industries, Inc.). After the coating, drying was performed in a drier at 120°C for one minute.

(Example 1)

The carbon nanotube-containing composition obtained in a wet state in Reference example 1 (dry weight 25 mg), 1.8 g of a 3.5 mass% aqueous solution of the sodium carboxymethyl cellulose (weight-average molecular weight 35,000) obtained in Reference example 2, and 13.3 g of zirconia beads (Torayceram (registered trademark), manufactured by Toray Industries, Inc., bead size 0.8 mm) were put in a container and adjusted to pH10 with a 28% aqueous ammonia solution (manufactured by Kishida Chemical Co., Ltd.). This container was shaken for 2 hours using a vibratory ball mill (VS-1, manufactured by Irie Shokai Co., Ltd., vibration speed 1,800 cpm (60Hz)) to prepare a paste of a carbon nanotube-containing composition. The carbon nanotube-containing composition in the resulting carbon nanotube-containing composition paste had a particle diameter of 2.9 μm.
Then, this carbon nanotube-containing composition paste was diluted with ion-exchanged water so that the concentration of the carbon nanotube-containing composition came to 0.15 mass% and 10 g of the diluted solution was adjusted to pH10 with a 28% aqueous ammonia solution. The aqueous solution was subjected to dispersion treatment while cooling with ice by using a ultrasonic homogenizer (VCX-130, manufactured by Ieda Trading Corporation) at an output of 20 W for 1.5 minutes (2 kW·min/g). The liquid temperature was maintained at 10°C or less during the dispersion treatment. The resulting liquid was subjected to centrifugal treatment in a high speed centrifugal separation machine (MX-300, manufactured by Tomy Seiko Co., Ltd.) operated at 10,000 G for 15 minutes to produce 9 g of a dispersion liquid of the carbon nanotube-containing composition. AFM measurement showed that the carbon nanotube-containing composition in this dispersion liquid had an average diameter of 1.7 nm. This agreed with the arithmetic outside diameter average of 1.7 nm determined for randomly selected 100 carbon nanotubes by high resolution transmission electron microscopy, suggesting that the carbon nanotube-containing composition was in a state of isolated dispersion. For the carbon nanotube-containing composition, the average length was 3.8 μm.

Water was added to this dispersion liquid so that the final concentration of the carbon nanotube-containing composition came to 0.035 mass% to provide a film coating liquid. This coating was applied with a bar coater over the aforementioned polyethylene terephthalate (PET) film (Lumirror (registered trademark) U46, manufactured by Toray Industries, Inc., light transmittance 91.3%, 15 cm × 10 cm) provided with an undercoat layer, followed by air-drying and additional drying in a drier at 120°C for one minute to immobilize the carbon nanotube-containing composition. The resulting electrically conductive film had a surface resistance of $3.5 \times 10^2$ Ω/□, light transmittance of 88.0% (transparent electrically conductive film 88.0% / PET film 91.3% = 0.96).

Here, the coagulation diameter of the carbon nanotube-containing composition on the base was determined to be 4.0 nm by scanning electron microscopy. The average length of the carbon nanotubes on the base was thought to be almost the same as that in the dispersion liquid.

(Example 2)

Except that the sodium carboxymethyl cellulose obtained in Reference example 3 (weight-average molecular weight 45,000) was used as dispersant, the same procedure as in Example 1 was carried out to produce a paste of a carbon nanotube-containing composition. The carbon nanotube-containing composition in the above paste had a particle diameter of 2.6 μm. Using this carbon nanotube-containing composition paste, the same procedure as in Example 1 was carried out to produce 9 g of a dispersion liquid of the carbon nanotube-containing composition. AFM measurement showed that the dispersoid of the carbon nanotube-containing composition in this dispersion liquid had an average diameter of 1.7 nm. This agreed with the arithmetic outside diameter average of 1.7 nm determined for randomly selected 100 carbon nanotubes by high resolution transmission electron microscopy and this indicates a state of isolated dispersion. For the carbon nanotube-containing composition, the average length was 3.9 μm.

Subsequently, this dispersion liquid of a carbon nanotube-containing composition was applied to a film by the same procedure as in Example 1. The resulting electrically conductive film had a surface resistance of $3.7 \times 10^2$ Ω/□, light transmittance of 88.0% (transparent electrically conductive film 88.0% / PET film 91.3% = 0.96).

Here, the coagulation diameter of the carbon nanotube-containing composition on the base was determined to be 4.1 nm by scanning electron microscopy.

(Example 3)

Except that the sodium carboxymethyl cellulose obtained in Reference example 4 (weight-average molecular weight 54,000) was used as dispersant, the same procedure as in Example 1 was carried out to produce a paste-like carbon nanotube-containing composition. The carbon nanotube-containing composition in the above paste had a particle diameter of 2.4 μm. Using this carbon nanotube-containing composition paste, the same procedure as in Example 1 was carried out to produce 9 g of a dispersion liquid of the carbon nanotube-containing composition. AFM measurement showed that the dispersoid of the carbon nanotube-containing composition in this dispersion liquid had an average diameter of 2.8 nm. For the carbon nanotube-containing composition, the average length was 3.8 μm.

Subsequently, this dispersion liquid of a carbon nanotube-containing composition was applied to a film by the same procedure as in Example 1. The resulting electrically conductive film had a surface resistance of $4.1 \times 10^2$ Ω/□, light transmittance of 88.0% (transparent electrically conductive film 88.0% / PET film 91.3% = 0.96).

Here, the coagulation diameter of the carbon nanotube-containing composition on the base was determined to be 4.4 nm by scanning electron microscopy.

(Example 4)

Except that the sodium carboxymethyl cellulose obtained in Reference example 5 (weight-average molecular weight 18,000) was used as dispersant, the same procedure as in Example 1 was carried out to produce a paste-like carbon nanotube-containing composition. The carbon nanotube-containing composition in the above paste had a particle diameter of 3.9 μm. Using this carbon nanotube-containing composition paste, the same procedure as in Example 1 was carried out to produce 9 g of a dispersion liquid of the carbon nanotube-containing composition. AFM measurement showed that the dispersoid of the carbon nanotube-containing composition in this dispersion liquid had an average diameter of 1.7 nm. For the carbon nanotube-containing composition, the average length was 3.9 μm.

Subsequently, this dispersion liquid of a carbon nanotube-containing composition was applied to a film by the same procedure as in Example 1. The resulting electrically conductive film had a surface resistance of $3.5 \times 10^2$ Ω/□, light transmittance of 88.0% (transparent electrically conductive film 88.0% / PET film 91.3% = 0.96).

Here, the coagulation diameter of the carbon nanotube-containing composition on the base was determined to be 4.0 nm by scanning electron microscopy.

(Example 5)

The carbon nanotube-containing composition obtained in a wet state in Reference example 1 (dry weight 15 mg) and 6.0 g of a 1 wt% aqueous solution of the sodium carboxymethyl cellulose (weight-average molecular weight 8,000) obtained in Reference example 6 were weighed out. Ion-exchanged water was added to adjust the entire weight to 10 g and ammonia was added to adjust the pH value to 10. While cooling with ice, the mixture was subjected to dispersion treatment for 1.5 minutes by an ultrasonic homogenizer with an output of 20 W to prepare a dispersion liquid of a carbon nanotube-containing composition. The resulting liquid was subjected to centrifugal treatment in a high speed centrifugal separation machine (MX-300, manufactured by Tomy Seiko Co., Ltd.) operated at 10,000 G for 15 minutes to produce 9 g of a carbon nanotube dispersion liquid. AFM measurement showed that the dispersoid of the carbon nanotube-containing composition in this dispersion liquid had an average diameter of 1.7 nm. For the carbon nanotube-containing composition, the average length was 3.8 $\mu$m.

Subsequently, this dispersion liquid of a carbon nanotube-containing composition was applied to a film by the same procedure as in Example 1. The resulting electrically conductive film had a surface resistance of $3.2 \times 10^2$ $\Omega/\square$, light transmittance of 88.0% (transparent electrically conductive film 88.0% / PET film 91.3% = 0.96).

Here, the coagulation diameter of the carbon nanotube-containing composition on the base was determined to be 4.0 nm by scanning electron microscopy. The average length of carbon nanotubes on the base was thought to be almost the same as that in a dispersion liquid.

(Comparative example 1)

Except that sodium carboxymethyl cellulose (Cellogen (registered trademark) 5A, manufactured by Dai-Ichi Kogyo Seiyaku Co., Ltd. (weight-average molecular weight 78,000)) was used as dispersant, the same procedure as in Example 1 was carried out to prepare a paste-like carbon nanotube-containing composition. The carbon nanotube-containing composition in this carbon nanotube-containing composition paste had a particle diameter of 4.5 $\mu$m.

The, using this carbon nanotube-containing composition paste, the same procedure as in Example 1 was carried out to produce 9 g of a dispersion liquid of the carbon nanotube-containing composition. AFM measurement showed that the dispersoid of the carbon nanotube-containing composition in this dispersion liquid had an average diameter of 2.7 nm. For the carbon nanotube-containing composition, the average length was 3.3 $\mu$m.

Subsequently, this dispersion liquid of a carbon nanotube-containing composition was applied to a film by the same procedure as in Example 1. The resulting electrically conductive film had a surface resistance of $4.8 \times 10^2$ $\Omega/\square$, light transmittance of 88.0% (transparent electrically conductive film 88.0% / PET film 91.3% = 0.96).

Here, the coagulation diameter of the carbon nanotube-containing composition on the base was determined to be 4.8 nm by scanning electron microscopy.

Fig. 1 illustrates the relation of the weight-average molecular weight of the dispersants used in Examples 1 to 5 and Comparative example 1 with the coagulation diameter and average length of the carbon nanotube-containing compositions in the resulting electrically conductive films. The coagulation diameter tends to decrease and the average length of carbon nanotubes tends to increase as the weight-average molecular weight of the dispersant decreases. It is suggested that as the weight-average molecular weight of the dispersant exceeds 60,000, the coagulation diameter of the carbon nanotube-containing composition increases while the dispersibility of the carbon nanotube-containing composition decreases. It is also suggested that as the weight-average molecular weight of the dispersant exceeds 60,000, the average length of the carbon nanotube-containing composition shortens and carbon nanotubes are broken when subjected to dispersion treatment.

Industrial Applicability

An electrically conductive molded body obtained by applying a dispersion liquid of carbon nanotubes of the present invention as a coat exhibits high electrical conductivity, so that it can be used as cleanroom parts, such as static dissipative shoes and anti-static plates, and display/automobile parts, such as electromagnetic shielding materials, near-infrared blocking materials, transparent electrodes, touch panels and radio wave absorbing materials. Of these, it particularly exhibits excellent performance as touch panels, mainly required to satisfy smooth surface needs, and display-related transparent electrodes, found in liquid crystal displays, organic electroluminescence displays, electronic paper, and the like.

**Claims**

**1.** A dispersion liquid of a carbon nanotube-containing composition comprising a carbon nanotube-containing composition, a dispersant with a weight-average molecular weight of 5,000 or more and 60,000 or less as determined by gel permeation chromatography, and an aqueous solvent.

2. A dispersion liquid of a carbon nanotube-containing composition as described in Claim 1, wherein the dispersant is an ionic polymer.

3. A dispersion liquid of a carbon nanotube-containing composition as described in either Claim 1 or 2, wherein the dispersant is a polysaccharide.

4. A dispersion liquid of a carbon nanotube-containing composition as described in any one of Claims 1 to 3, wherein the dispersant is a carboxymethyl cellulose or a salt thereof.

5. A dispersion liquid of a carbon nanotube-containing composition as described in any one of Claims 1 to 4, wherein double-walled carbon nanotubes account for 50% or more of the total number of the carbon nanotubes in the carbon nanotube-containing composition.

6. An electrically conductive molded body comprising a base and an electrically conductive layer formed thereon, the electrically conductive layer containing a carbon nanotube-containing composition and a dispersant having a weight-average molecular weight of 5,000 to 60,000 as determined by gel permeation chromatography, the coagulation diameter of the carbon nanotube-containing composition being 1 nm to 4.5 nm, and the average length of the carbon nanotube-containing composition being 3.5 $\mu$m to 6 $\mu$m.

7. An electrically conductive molded body as described in Claim 6, wherein double-walled carbon nanotubes account for 50% or more of the total number of the carbon nanotubes in the carbon nanotube-containing composition.

8. An electrically conductive molded body as described in either Claim 6 or 7, wherein the dispersant is an ionic polymer.

9. An electrically conductive molded body as described in any one of Claims 6 to 8, wherein the dispersant is a polysaccharide.

10. An electrically conductive molded body as described in any one of Claims 6 to 9, wherein the dispersant is carboxymethyl cellulose or a salt thereof.

11. An electrically conductive molded body as described in any one of Claims 6 to 10, wherein the total light transmittance is 70% or more and the surface resistance is $10°$ $\Omega/\square$ or more and $10^4$ $\Omega/\square$ or less.

12. An electrically conductive molded body as described in any one of Claims 6 to 11, wherein the total light transmittance is 80% or more and the surface resistance is $10°$ $\Omega/\square$ or more and $10^3$ $\Omega/\square$ or less.

13. A production method for an electrically conductive molded body comprising a step for coating a base with a dispersion liquid of a carbon nanotube-containing composition as described in any one of Claims 1 to 5 and a step for removing an aqueous solvent.

## Fig. 1

**INTERNATIONAL SEARCH REPORT**

| International application No. |
|---|
| PCT/JP2013/067059 |

A.  CLASSIFICATION OF SUBJECT MATTER
*C01B31/02*(2006.01)i, *H01B1/24*(2006.01)i, *H01B5/14*(2006.01)i, *H01B13/00*
(2006.01)i

According to International Patent Classification (IPC) or to both national classification and IPC

B.  FIELDS SEARCHED

Minimum documentation searched (classification system followed by classification symbols)
C01B31/02, H01B1/24, H01B5/14, H01B13/00

Documentation searched other than minimum documentation to the extent that such documents are included in the fields searched
   Jitsuyo Shinan Koho      1922-1996   Jitsuyo Shinan Toroku Koho   1996-2013
   Kokai Jitsuyo Shinan Koho   1971-2013   Toroku Jitsuyo Shinan Koho   1994-2013

Electronic data base consulted during the international search (name of data base and, where practicable, search terms used)
   CAplus(STN), Science Direct, Scopus, WPI, CiNii,
   JSTPlus/JMEDPlus/JST7580(JDreamIII)

C.  DOCUMENTS CONSIDERED TO BE RELEVANT

| Category* | Citation of document, with indication, where appropriate, of the relevant passages | Relevant to claim No. |
|---|---|---|
| X | JP 2010-254546 A  (Toray Industries, Inc.), 11 November 2010 (11.11.2010), claims 1 to 24; paragraphs [0013] to [0025], [0038], [0050] & US 2012/0058889 A1    & EP 2404873 A1 & WO 2010/101205 A1    & TW 201038472 A & KR 10-2011-0124764 A   & CN 102341345 A | 1-13 |
| X | JP 2008-189901 A  (Honda Motor Co., Ltd.), 21 August 2008 (21.08.2008), claims 1 to 3 & US 2010/0095911 A1 | 1-4 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July, 2013 (05.07.13) | 23 July, 2013 (23.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2013/067059 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2008-230935 A (Chemicals Evaluation and Research Institute, Japan), 02 October 2008 (02.10.2008), claims 1 to 8; paragraph [0048] (Family: none) | 1-4 |
| A | JP 2008-201626 A (Toray Industries, Inc.), 04 September 2008 (04.09.2008), claims 1 to 11 (Family: none) | 1-13 |
| A | JP 2006-63307 A (Ezaki Glico Co., Ltd.), 09 March 2006 (09.03.2006), claims 1 to 26 (Family: none) | 1-13 |
| A | JP 2007-534588 A (Eikos, Inc.), 29 November 2007 (29.11.2007), claims 1 to 21 & US 2006/0097812 A1 & EP 1751331 A & WO 2006/073420 A2 & CA 2562475 A & CN 1961102 A & AU 2005323492 A | 1-13 |
| A | JP 2012-56788 A (Toray Industries, Inc.), 22 March 2012 (22.03.2012), claims 1 to 9 (Family: none) | 1-13 |
| A | JP 2006-292495 A (Toray Industries, Inc.), 26 October 2006 (26.10.2006), claims 1 to 9; paragraph [0083] (Family: none) | 1-13 |
| A | Teruo TAKAHASHI et al., Dispersion and purification of single-wall carbon nanotubes using carboxymethylcellulose, Japanese Journal of Applied Physics, 9 June 2004, Vol.43, No.6A, pp.3636-3639 | 1-13 |
| A | Robert C. TENENT et al., Ultrasmooth, large-area, high-uniformity, conductive transparent single-walled-carbon-nanotube films for photovoltaics produced by ultrasonic spraying, Advanced Materials, 21 August 2009, Vol.21, No. 31, pp.3210-3216 | 1-13 |

Form PCT/ISA/210 (continuation of second sheet) (July 2009)

# EP 2 865 645 A1

**INTERNATIONAL SEARCH REPORT**

International application No.

PCT/JP2013/067059

---

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**      **Observations where unity of invention is lacking (Continuation of item 3 of first sheet)**

This International Searching Authority found multiple inventions in this international application, as follows:

    Since document 1 sets forth a dispersion liquid of a carbon nanotube-containing composition, which satisfies the definition of claim 1, the invention of claim 1 cannot be considered novel over the invention set forth in document 1 and thus does not have a special technical feature.
    Therefore, three inventions (invention groups), which comprise the inventions of claims 1-5, the inventions of claims 6-12 and the invention of claim 13, are involved in claims.
    Meanwhile, the invention of claim 1 having no special technical feature is classified into invention 1.
(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

    ☐ The additional search fees were accompanied by the applicant's protest but the applicable protest fee was not paid within the time limit specified in the invitation.

    ☐ No protest accompanied the payment of additional search fees.

Form PCT/ISA/210 (continuation of first sheet (2)) (July 2009)

22

**INTERNATIONAL SEARCH REPORT**

International application No.

PCT/JP2013/067059

Continuation of Box No.III of continuation of first sheet(2)

Document 1: JP 2010-254546 A (Toray Industries, Inc.), 11 November 2010 (11.11.2010)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006269311 A

- JP 2009163959 A